# EUROPEAN PATENT APPLICATION

(11) **EP 2 819 256 A1**
(43) Date of publication of application: **31.12.2014**
(21) Application number: 13751740.5
(22) Date of filing: 22.02.2013
(51) Int. Cl.: H02G 3/04, B60R 16/02

(54) **ELECTRICAL WIRE ROUTING STRUCTURE, AND ELECTRICAL WIRE WITH EXTERNAL CLADDING MEMBER**

(30) Priority: 24.02.2012 JP 2012038867
(71) Applicant: Yazaki Corporation, Minato-ku Tokyo 108-8333 (JP)
(72) Inventor: NAGAHASHI, Mitsuharu, Susono-shi Shizuoka 410-1107 (JP)
(74) Representative: Grünecker, Kinkeldey, Stockmair & Schwanhäusser
(86) International application number: PCT/JP2013/054501
(87) International publication number: WO 2013/125679

(57) **Abstract**

Disclosed is a wiring structure of an electric wire and an electric wire with an exterior member improving degree of freedom for wiring passage, downsizing wiring space, and streamlining wiring workability. In An electric wire (1) with exterior member provided with an electric wire (10) and an exterior member (20), the electric wire (10) includes an inner conductor (11) made of a plurality of single wires (W); an inner insulating layer (12) covering a circumference of the inner conductor (10); and an outer conductor (13) made of a plurality of single wires (W) following an outer circumference of the outer conductor (13), thereby reducing a diameter of the electric wire (10) relatively, reducing anisotropy of the electric wire in a bending direction, and decreasing a required setting space, which streamlines wiring workability.

## Description

### [Technical Field]

The invention relates to wiring structures of electric wires and electric wires with exterior members, and particularly to wiring structures of electric wires and electric wires with exterior members disposed inside or outside (under floors of) vehicles such as automobiles.

### [Background Art]

Conventionally, in a vehicle such as an automobile in which various electric components are mounted, and in order to supply power or to transmit a control signal to the electric components, a wire harness is wired. Also, there has been known a vehicle such as a hybrid vehicle or an electric vehicle running with a driving power driving a motor using electric power of a battery. In such a vehicle driven by the battery, DC outputted from the battery is converted to AC with a certain frequency by an inverter, by which the motor is designed to be driven. Thus, for a power line connecting the battery and the inverter and transmitting DC utilized is an electric wire with two cores corresponding to positive and negative electrodes (for example, refer to PTL 1)

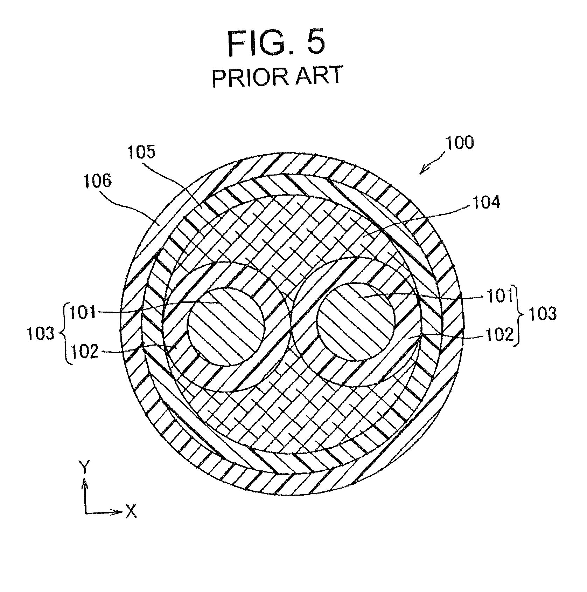

An electric wire (a cable) 100 recited in PTL 1 is, as shown in Fig. 5, provided with two insulating wires 103 in which a conductor 101 formed of a single wire or a braid wire is covered by an insulating member 102, an intermediate member 104 disposed around these insulating core wires 103, a press winding tape 105 winding around the two insulating wires 103 and the intermediate member 104, and a sheath 106 covering an outside of the press winding tape 105. This electric wire 100 allows for adequately selecting component of the intermediate member 104, reducing weight of the electric wire and providing the environmentally-friendly electric wire.

### [Citation List]

### [Patent Literature]

[PTL 1]
Japanese Patent Application Laid-Open Publication No. 2007-42521

### [Summary of Invention]

### [Technical Problem]

Disadvantageously, as conventional electric wire 100, the electric wire in which two insulating core wires 103 composed of the conductor 101 and the insulating member 102 are arranged in parallel may be relatively readily bent in a parallel direction (X direction in Fig. 5) of the insulating core wire 103 of two directions crossing its extension direction, whereas may be unlikely bent in a direction orthogonal to the parallel direction (Y direction in Fig. 5). Therefore, since flexibility of the electric wire involves its direction (anisotropy),it is unlikely to bend the electric wire in any direction upon wiring in a vehicle, and wiring passage becomes subject to restriction and an inexpedience of wiring distance (electric wire length) being elongated is raised. Also, since in the conventional electric wire the press winding tape 105 and the sheath 106 are provided to cover the parallel two insulating core wires 103, a diameter of the sheath 106 exceeds twice that of the insulating core wire 103, inducing a wasted space in the sheath 106. Thus, the sheath including such electric wire becomes large, and a large space for wiring is thereby required and the wiring passage is subject to further restriction.

The object of the invention is to provide a wiring structure for an electric wire and an electric wire with an exterior member improving freedom of wiring passage, downsizing wiring space, and streamlining wiring workability.

### [Solution to Problem]

In order to resolve the problems mentioned above, there is provided a wiring structure of an electric wire according to one aspect of the invention, including: covering an outer circumference of the electric wire by an exterior member in a longitudinal direction of the electric wire, wherein the electric wire including: an inner conductor in which a plurality of single wires is bundled; an inner insulating layer covering a circumference of the inner conductor; an outer conductor made of a plurality of single wires following an outer circumference of the inner insulating layer; and an outer insulating layer covering a circumference of the outer conductor.

Preferably, the single wire composing the outer conductor and the single wire composing the outer conductor are made of a single wire of the same material and the same diameter, and wherein the outer conductor is formed of a plurality of single wires, a number of which is more than that of the inner conductor.

Preferably, the inner conductor is composed of the nineteen single wires composed of three steps of one core wire, six intermediate wires surrounding the core wire, and twelve outer wires surrounding the intermediate wires, and wherein the outer conductor is composed of the twenty single wires composed of one step along the outer circumference of the inner insulating layer.

Preferably, the single wire composing the inner conductor and the single wire composing the outer conductor are made of a single wire of different material from each other, and wherein the outer conductor is composed of the single wire of higher electric conductivity than the inner conductor.

Preferably, the plurality of wires composing the inner conductor is spirally twisted, the plurality of wires composing the outer conductor also spirally twisted, and wherein the outer conductor is configured to have a twist pitch larger than that of the inner conductor.

Preferably, the wiring structure is used for a power line connecting a battery and an inverter of a hybrid vehicle or an electric vehicle, and is wired under a floor of the vehicle

An electric wire with an exterior member according to another aspect of the invention, includes: an inner conductor in which a plurality of single wires is bundled; an inner insulating layer covering a circumference of the inner conductor; an outer conductor made of a plurality of single wires following an outer circumference of the inner insulating layer; an outer insulating layer covering a circumference of the outer conductor; and an exterior member covering an outer circumference of the electric wire in a longitudinal direction of the electric wire.

### [Advantageous Effects of Invention]

According to the invention, since the electric wire includes the inner conductor, the inner insulating layer, the outer conductor, and the outer insulating layer, and has coaxial geometry, the anisotropy of flexibility in the direction crossing the extension direction of the electric wire can be eliminated. Also, when comparing with a two-core electric wire of the same cross-sectional shape, the diameters of the inner conductor and the inner insulating layer can be formed in a similar degree as those of two-core wire, and lengthening of the circumferential length thereof makes it possible to restrict increase of the outer conductor dimension. Therefore, the electric wire of the invention allows for restriction of increase of bending stiffness thereof more than that of the electric wire in which two cores lie in parallel, also minimizing the inner diameter and outer diameter of outer member covering the electric wire. As mentioned above, elimination of the anisotropy of the flexibility in the electric wire, and restriction of the bending stiffness improve freedom for wiring passage upon wiring in the vehicle, and reduce wiring space, as well as improve workability of wiring so as to improve efficiency. Furthermore, since all diameter of wiring body including the outer member can be restricted, reduction of the wiring space is further facilitated.

According to the invention, since increasing the number of single wire of the outer conductor more than the inner conductor allows cross-sectional area of the outer conductor electric wire to increase, even when the outer conductor as the length of the single wire per unit length of the electric wire becomes further lengthened, the difference of electric resistance between the inner and outer conductors is readily adjusted to be equalized. At this time, the inner conductor is formed such that a plurality of single wires is integrated (bundled into one), and it is not easy to modify the number of the wires, whereas the outer conductor is disposed along the circumference of the inner insulating layer, it is thus easy to modify the number, allowing increase of the outer diameter to minimize upon increasing the number.

According to the invention, since the inner conductor is composed of the nineteen single wires made of three steps of one, six, and twelve single wires, and the outer conductors is composed of one step of the twenty single wires, the diameter of the inner conductor combined into a compact shape can be minimized, as well as the outer diameter of the outer conductor can be minimized by one step of single wire, while restricting increase of the diameter of the electric wire and ensuring a required cross-sectional area of the conductor.

According to the invention, since electric conductivity of the outer conductor becomes higher than that of the inner conductor, the single wire of the outer conductor is thinned so as to decrease the outer diameter of the electric wire. Also, even when the outer conductor as a length of the single wire per length unit of the electric wire becomes further lengthened, the difference of electric resistance between the inner and outer conductors is readily adjusted to be equalized. Herein, for example, as the single wire of the inner conductor aluminum wire made of aluminum alloy is used, as the single wire of the outer conductor a copper wire made of copper or copper alloy is used, material of the single wire is thus properly selected for the inner and outer conductor.

According to the invention, the plurality of single wires is spirally twisted, so as to compose each inner conductor and outer conductor, and twist pitch of the outer conductor is enlarged more than that of the inner conductor, so as to prevent a length of the single wire of the outer conductor per unit length of the electric wire from being elongated more than is required. Namely, since the outer conductor to be wound (twisted) around a circumference of the inner insulating layer has a longer circumference length of winding than that of inner conductor, when being twisted in the same pitch, the length of the single wire of the outer conductor becomes longer than the inner conductor, which causes an electric resistance of the outer conductor to become high. Therefore, the twist pitch of the outer conductor is made enlarged, that is, the number of winding per unit length is reduced, which allows the length of the single wire of the outer conductor relative to the inner conductor to be restricted, readily equalizing the electric resistance value.

According to the invention, when using as a power line connecting the battery and the inverter in the hybrid vehicle or the electric vehicle, freedom for such wiring passage as mentioned above is high, a wiring space can be reduced, a space under the floor of the vehicle can be effectively utilized, and the better workability, even under floor where it is likely difficult to work wiring, is ensured.

According to the invention, similarly to the electric wire wiring structure mentioned above, it is possible to increase freedom for wiring passage and to reduce wiring space, improving workability of wiring work so as to improve efficiency. Also, since the cross-sectional shape electric wire becomes round, it is made possible to reduce inner diameter and outer diameter of the exterior member so as to minimize a gap to the exterior member. Furthermore, since comparing with the conventional electric wire of two cores, it is made possible to enlarge contact area of the electric wire and the exterior member, heat from the electric wire heated by energization is transferred to the exterior member, raising cooling effect by radiating heat from this exterior member.

### [Brief Description of Drawings]

[Fig. 1]

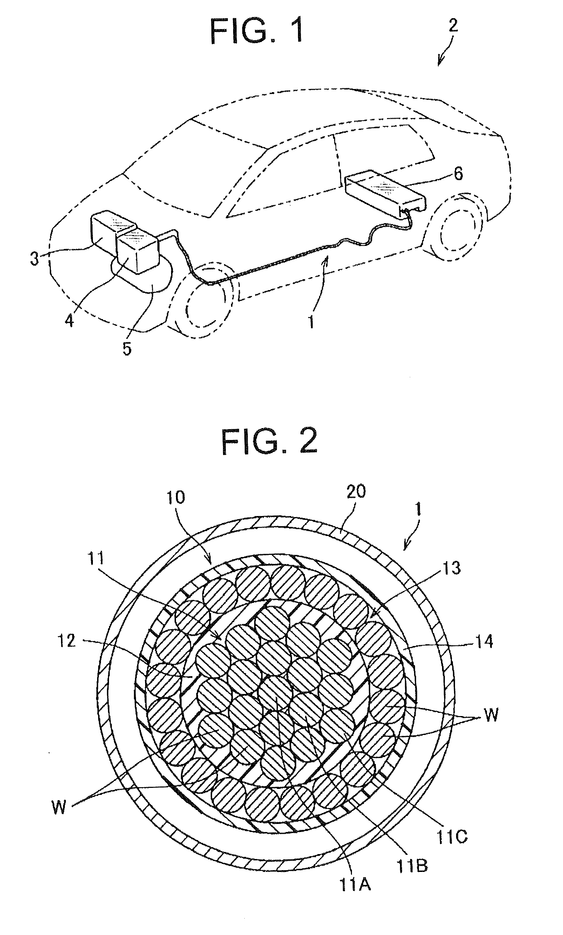

   FIG. 1 is a perspective view illustrating a wiring structure according to one embodiment of the invention;
[Fig. 2]
   FIG. 2 is a cross-sectional view illustrating an electric wire with an exterior member composing the foregoing wiring structure;
[Fig. 3]

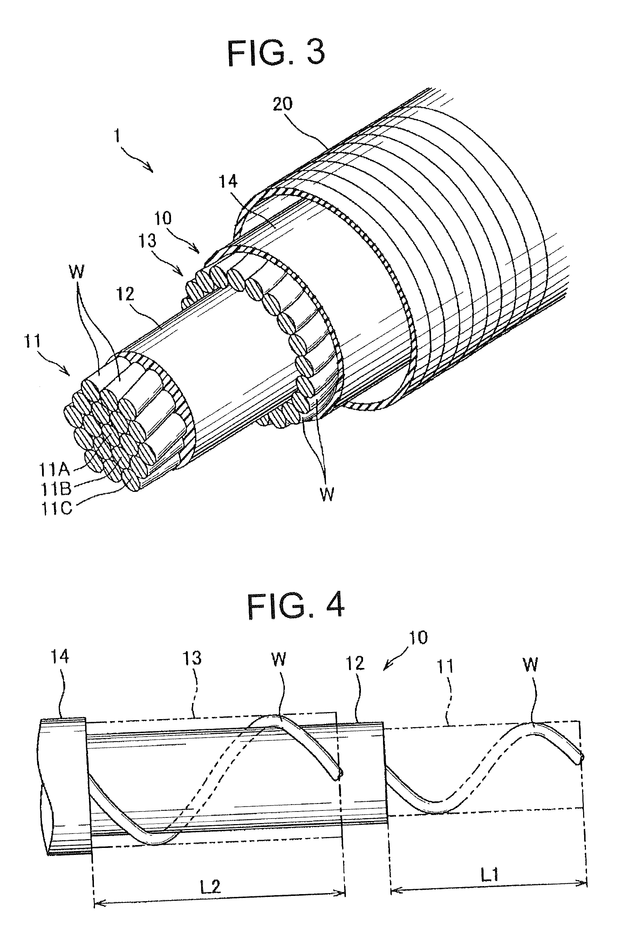

   FIG. 3 is a perspective view illustrating the foregoing electric wire with an exterior member;
[Fig. 4]
   FIG. 4 is a view illustrating in detail en electric wire used for the wiring structure; and
[Fig. 5]
   FIG. 5 is a cross-sectional view illustrating an electric wire related to a conventional technology.

### [Description of Embodiments]

Referring FIGS. 1 to 4, a wiring structure of an electric wire according to the invention will be described. The wiring structure of the electric wire is, as shown in Fig. 1, provided with an electric wire with an exterior member 1 disposed in an automobile 2. The automobile 2 is a hybrid car driven by an engine and a motor, and is provided with an inverter 4 controlling motor drive and power recovery, and a trans axel 5 transmitting a drive force of an engine 3 and a motor to a drive wheel, and divide the drive force of the engine 3 to transmit to the generator, and a battery 6 charging power and supply power to the inverter 4. The electric wire with the exterior member 1 connects the inverter 4 and the battery 6 through under floor of the automobile 2, and is configured to include the electric wire 10, and an exterior member 20 covering circumference of the electric wire 10 along a length direction of the electric wire as shown in Fig. 2.

The electric wire 10 is to transmit power from the battery 6 to the inverter 4 or generated power from the inverter 4 to the battery 6, and is used for a power line to energize each positive and negative direct current. This electric wire 10 is, as shown in Figs. 2, 3, provided with an inner conductor 11 transmitting, e. g. , positive current, an inner insulating layer 12 covering a circumference of the inner conductor 11, an outer conductor 13 transmitting, e.g., negative current, and an outer insulating layer 14 covering a circumference of the outer conductor 13.

The exterior member 20 is composed of, e.g., a resin-made corrugated tube molded including a bellows tube part and a straight part, or metallic pipe. This exterior member 20 has an inner diameter slightly larger than an outer diameter of the electric wire 10 so as to pass through the electric wire 10 with some looseness, has circular cross-sectional shape, protects the electric wire 10, and is wired and fixed using an adequate fixture, with being bent, in the floor of the automobile 2 and the like. Also, the exterior member 20 is formed of material with conductivity and is connected to ground, which may compose a shield layer. Note that when the resin-made corrugated tube is used as the exterior member 20, inner or outer side thereof may be provided with a shield layer.

The inner conductor 11 is a twist wire in which a plurality of single wires are spirally twisted together, the number of single wire W thereof is nineteen in three steps of one core wire 11A, six intermediate wires 11B surrounding the core wire 11A, and twelve circumferential wires 11C surrounding the intermediate wires 11B. The outer conductor 13 is made of a plurality of single wires W spirally twisted along a circumference of the inner insulating layer 12, the number of single wire W is twenty in one step, namely, the outer conductor 13 is made 5% more than the inner conductor 11 in the number of single wire W (cross-sectional area). The plurality of single wires W composing such inner conductor 11 and outer conductor 13 is the same material and the same wire diameter, for example, and is made of annealed copper wire as copper and copper alloy, copper wire plated with tin or with nickel, or aluminum wire made of aluminum alloy as material. In the present invention, wire diameter of the single wire W is standardized in one type of 1mm.

The inner insulating layer 12 and the outer insulating layer 14 are composed of thermal plasticity resin material as which various types are known, and adequately selected from high-polymer material, for example, polyvinyl chloride resin, polyethylene resin, or polypropylene resin. Also, according to a type of resin material, there is used one to which plasticity material is added (polyvinyl chloride resin), or one in which cross-linking treatment is performed (polyvinyl chloride resin, polyethylene resin). Then the inner insulating layer 12 is molded integrally together with the inner conductor 11 by injection molding. Such outer conducer 13 as wounded around the circumference of the inner insulating layer 12 integrated with the inner conductor 11 is press-fitted into the outer insulating layer 14 molded into a cylinder shape, completing the electric wire 10.

In the electric wire 10 mentioned above, each single wire W of the inner conductor 11 and the outer conductor 13 is, as shown in Fig. 4, respectively twisted by predetermined twist pitches L1 and L2. Herein, for example, the twist pitch L1 of the single wire W in the inner conductor 11 is set to 58 mm, the twist pitch L2 of the single wire W in the outer conductor 13 to 65 mm, namely, the outer conductor 13 is made to have larger twist pitch by about 12% than the inner conductor 11 (L1<L2). Such twist pitches L1, L2 and the number of single wires W (cross-sectional area) are set to equalize electric resistance values of the inner conductor and the outer conductor 13.

Specifically, the smaller the twist pitches L1, L2, the larger the winding number of single wire W, and relatively the longer the single wire W per unit length of the single wire 10, the electric resistance thus increases, in contrast, the larger the twist pitches L1, L2, the smaller the winding number of single wire W, and relatively the shorter the single wire W per unit length of the single wire 10, the electric resistance thus decreases. Also, since the diameter of the outer conductor 13 is larger than that of the inner conductor 11, even if twist pitches L1, L2 are set to the same, the single wire W becomes longer than the inner conductor 11, and thereby the electric resistance becomes larger. The smaller the twist pitches L1, L2, not only the larger the electric resistance, but the higher flexibility of the electric wire 10, so as to have characteristics of being readily bent, and an increase of the flexibility of the electric wire 10 therefore allows for improvement of the freedom of wiring.

On the other hand, each cross-sectional area of the inner conductor 11 and the outer conductor 13 is set by each number of single wire W, the more the number of single wire W, the smaller the electric resistance, and the fewer the number of single wire W, the larger the electric resistance. It follows from this that the electric wire 10 of the present embodiment the twist pitch L1 of the single wire W in the outer conductor 13 is set larger than the twist pitch L2 in the inner conductor 11, and the number of single wire W in the outer conductor 13 is set larger than that of inner conductor 11. This is followed by that the electric resistances of the inner conductor 11 and the outer conductor 13 are equalized. At this time, for example, in the outer conductor 13, the number of single wire W is furthermore increased, the electric resistance is decreased, and it is possible to set the twist pitch L2 of the single wire W in the outer conductor 13 smaller by the decrease, and decrease of the twist pitch L2 may thus improve the flexibility of the electric wire 10.

According to the present embodiment, since the inner conductor 11 and the outer conductor 13 are concentrically arranged so as to configure the electric wire 10, it is made possible to relatively decrease the diameter of the electric wire 10, and to eliminate or restrict anisotropy related to bending direction of the electric wire 10. Furthermore, since the electric wire 10 is formed into a circular cross-sectional shape, it is made possible to minimize the inner and the outer diameters of the exterior member 20 covering the electric wire 10, and thereby to minimize a gap between the electric wire 10 and the exterior member 20, which allows the electric wire with exterior member 1 to minimize. Therefore, the electric wire 10 is made to be bent easily in any directions, the required setting space is made decreased, effectively wiring the electric wire with exterior member 1 through narrow gap in a space under the floor of the automobile 2. Since the electric wire with exterior member 1 improves its flexibility, it is made possible to readily wire, so as to improve workability.

Furthermore, adequate setting of the numbers of the single wire W and the twist pitches L1, L2 of the inner conductor 11 and the outer conductor 13 can equalize the electric resistance to each other, and adjust ease of bending the electric wire 10. Therefore, it is possible to provide the electric wire 10 with a desired property according to connecting subject of the electric wire 10 or installation site, and thus restrict transmission loss of direct current for driving the motor or charging the battery 6. This makes possible to stabilize operation of the devices, improve the freedom of the wiring passage, and downsize wiring space, and further to raise effectiveness of the wiring work. Also, since the contact area of the electric wire 10 and the exterior member 20 is relatively made larger, heat from the electric wire 10 generated by energization is transferred to the exterior member 20, and is discharged from the exterior member 20, improving cooling effect.

Note that the aforementioned embodiments merely show such as, but not limited to, typical embodiment of the present invention. Namely, it is to be understood that various changes and modifications will be apparent to those skilled in the art. Therefore, unless otherwise such changes and modifications depart from the scope of the present invention hereafter defined, they should be construed as being included therein.

For example, although in the electric wire with exterior member 1 of the foregoing embodiment the electric wire 10 is illustrated to be inserted with some looseness inside the exterior member 20 via some gap, the electric wire 10 and the exterior member 20 may be integrated, or between them an adequate member may be inserted therebetween such as a shield layer, an adhesive layer, a damping layer, or a waterproof layer. Also, in the foregoing embodiment, as a power line for connecting the invertor 4 and the battery 6 in the hybrid vehicle 2 the electric wire 20 is illustrated to be used, but the electric wire with the exterior member 1 of the invention is not limited to one which connects the invertor 4 and the battery 6, and moreover to power line, but may be utilized for application for connecting any devices to each other. Furthermore, the foregoing embodiment, the wiring structure in which the electric wire with the exterior member 1 is wired under floor of the automobile 2 is though illustrated, but not limited to this, or to limited to application for the automobile, but can be utilized for wiring structure in any site. Although in the foregoing embodiment, the plurality of single wires W composing the inner conductor 11 and the outer conductor 13 is set to the same material and the same wire diameter, but not limited to this, and the material and the diameter thereof differs from each other, in this case the outer conductor 13 may preferably composed of single wire W of higher conductivity than the inner conductor 11.

### [Reference Signs List]

- 1: electric wire with exterior member
- 2: automobile
- 4: inverter
- 6: battery
- 10: electric wire
- 11: inner conductor
- 11A: core wire
- 11B: intermediate wire
- 11C: circumferential wire
- 12: inner insulating layer
- 13: outer conductor
- 14: outer insulating layer
- 20: exterior member
- L1, L2: twist pitch
- W: single wire

## Claims

1. A wiring structure of an electric wire, comprising:
covering an outer circumference of the electric wire by an exterior member in a longitudinal direction of the electric wire, wherein the electric wire including:
an inner conductor in which a plurality of single wires is bundled;
an inner insulating layer covering a circumference of the inner conductor;
an outer conductor made of a plurality of single wires following an outer circumference of the inner insulating layer; and
an outer insulating layer covering a circumference of the outer conductor.

2. The wiring structure of an electric wire as claimed in claim 1, wherein the single wire composing the outer conductor and the single wire composing the outer conductor are made of a single wire of the same material and the same diameter, and wherein the outer conductor is formed of a plurality of single wires, a number of which is more than that of the inner conductor.

3. The wiring structure of an electric wire as claimed in claim 2, wherein the inner conductor is composed of the nineteen single wires composed of three steps of one core wire, six intermediate wires surrounding the core wire, and twelve outer wires surrounding the intermediate wires, and wherein the outer conductor is composed of the twenty single wires composed of one step along the outer circumference of the inner insulating layer.

4. The wiring structure of an electric wire as claimed in any one of claims 1 to 3, wherein the single wire composing the inner conductor and the single wire composing the outer conductor are made of a single wire of different material from each other, and wherein the outer conductor is composed of the single wire of higher electric conductivity than the inner conductor.

5. The wiring structure of an electric wire as claimed in any one of claims 1 to 4, wherein the plurality of wires composing the inner conductor is spirally twisted, the plurality of wires composing the outer conductor also spirally twisted, and wherein the outer conductor is configured to have a twist pitch larger than that of the inner conductor.

6. The wiring structure of an electric wire as claimed in any one of claims 1 to 5, wherein
the wiring structure is used for a power line connecting a battery and an inverter of a hybrid vehicle or an electric vehicle, and is wired under a floor of the vehicle.

7. An electric wire with an exterior member, comprising:
an inner conductor in which a plurality of single wires is bundled;
an inner insulating layer covering a circumference of the inner conductor;
an outer conductor made of a plurality of single wires following an outer circumference of the inner insulating layer;
an outer insulating layer covering a circumference of the outer conductor; and
an exterior member covering an outer circumference of the electric wire in a longitudinal direction of the electric wire.
